# EUROPEAN PATENT SPECIFICATION

(11) **EP 1 864 899 B1**
(45) Date of publication and mention of the grant of the patent: **29.12.2010**
(21) Application number: 07252319.4
(22) Date of filing: 08.06.2007
(51) Int. Cl.: B62K 11/10, F16H 57/04

(54) **Motorcycle**
Motorrad
Motocyclette

(30) Priority: 09.06.2006 JP 2006160437; 16.03.2007 JP 2007068937; 21.05.2007 JP 2007134714
(43) Date of publication of application: 12.12.2007
(73) Proprietor: Yamaha Hatsudoki Kabushiki Kaisha, Iwata-shi, Shizuoka 438-8501 (JP)
(72) Inventor: Yamamoto, Yoshiaki c/o Yamaha Hatsudoki K.K., Iwata-shi, Shizuoka-ken 438-8501 (JP); Sakashita, Yasuharu c/o Yamaha Hatsudoki K.K., Iwata-shi, Shizuoka-ken 438-8501 (JP)
(74) Representative: Lamb, Martin John Carstairs

(56) References cited:
- EP-A- 0 953 501
- EP-A2- 1 296 036
- JP-A- 2001 180 557
- US-A- 4 733 639
- US-A- 5 527 637

## Description

### FIELD OF THE INVENTION

The present invention relates to a motorcycle comprising an engine unit provided with a belt continuously variable transmission, and a body frame, by which the engine unit is supported to be able to swing vertically.

### BACKGROUND TO THE INVENTION

A scooter type motorcycle is generally constructed such that an engine unit, in which an engine body and a belt continuously variable transmission are made integral with each other, is supported by a body frame to be able to swing vertically, a rear end of the engine unit supports a rear wheel, and a saddle-type seat is mounted on the body frame.

With such motorcycle, from the viewpoint of inhibiting transmission of engine vibrations through a body frame to a rider, it is general that an engine unit is supported through a link mechanism on the body frame. A known arrangement incorporating a link mechanism is disclosed in prior art reference JP-A-2003-182674.

Also, in JP-A-2003-182674 cooling air is introduced into a belt chamber of the engine unit through a cooling duct in order to cool a belt of a continuously variable transmission. In this case, in order to accommodate vertical swinging of the engine unit, the cooling duct is connected to a belt chamber through a bellows-shaped flexible portion.

In the case where the engine unit is supported through the link mechanism on the body frame, a center of swinging of the engine unit is disposed at the connection of the link mechanism and the engine unit, and the direction in which the engine unit swings becomes complex, such as both vertically and longitudinally. Therefore, it is required that the flexible portion of the cooling duct be structured to have flexibility corresponding to the directions of swinging. However, this flexibility makes deformation, such as dents, etc. liable to be generated on the flexible portion by external forces and negative pressure caused by suction in the belt chamber and there is therefore concerns that the quantity of drawn air decreases and coolability of the belt chamber is reduced in some cases.

Also, the described construction in which the engine unit is supported through the link mechanism on the body frame involves a problem that even when opening manipulation of a throttle is performed, a response lag is liable to occur, in which acceleration begins one tempo behind, especially at starting and during acceleration. A feeling of indirectness or lack of responsiveness at the time of starting and at the time of acceleration may therefore be experienced by a rider.

The invention has been thought of in view of the conventional situation described above and has its object to provide a motorcycle capable of preventing or minimizing reductions in coolability, which is caused by deformation, such as dent, etc., of a cooling duct, and heightening a feeling of directness at the time of starting and acceleration.

EP 0953501 discloses a motorcycle comprising an engine with a belt type transmission and which is mounted on a frame via a link bracket. An air duct which incorporates a flexible portion extends from the engine and upwardly relative to the motorcycle. The flexible portion of the air accommodates some movement of the engine unit.

JP 2001-180557 discloses a motorcycle having an engine mounted on a frame via a linkage. An air duct extends from the engine unit, wherein the air duct has flexible portions permitting the air duct to extend to an air intake port.

US 4, 733, 639 discloses a motorcycle with an engine unit mounted on a frame via a linkage. An air duct which includes a flexible portion extends from the engine unit.

US 5, 527, 637 discloses an electric motorcycle in which a cooling intake air into a electric motor may be fed through a battery storage compartment to cool the batteries.

EP1296036 discloses a motorcycle having a swing type engine unit mounted on the vehicle body frame at the center of the vehicle body. The crankcase of the engine is formed integrally with a reducer in the form of a v-shaped stepless speed reducing mechanism. A duct is connected to the front portion of the reducer, so that outside air is sucked through the opened end and supplied into the reducer to cool the interior thereof. A cylinder of the engine is inclined toward the front to the extent of being almost horizontal.

### SUMMARY OF THE INVENTION

Various aspects of the present invention are defined in the independent claim 1. Some preferred features are defined in the dependent claims.

Described herein is a motorcycle comprising:
a body frame;
an engine unit directly pivotally mounted on the body frame about a pivot axis, wherein said engine unit comprises a belt continuously variable transmission accommodated within a belt chamber, and a balancer mechanism which includes a balancer shaft and is adapted to suppress engine vibrations due to a primary, inertial force; and
a cooling duct adapted to communicate cooling air into the belt chamber, wherein said cooling duct comprises a flexible portion which extends adjacent the engine pivot axis.

Accordingly, by directly pivotally mounting the engine unit on the body frame, the requirement for a separate linking mechanism is eliminated.

The engine unit may be directly pivotally mounted through an elastic member on the body frame. The elastic member may therefore act to reduce vibrations transmitted to the body frame through the pivot connection. The engine unit may be directly pivotally mounted on the body frame via a pivot shaft, wherein the pivot shaft may comprise an elastic member.

A portion of the cooling duct located upstream of the flexible portion may be fixed to the body frame. It should be understood that the term "upstream" is utilized with reference to the normal direction of drawn air when the motorcycle is in use, which is towards the engine unit.

The engine unit preferably further comprises a crank mechanism including a crank shaft, wherein
rotation of the crank shaft generates the primary, inertial force including a rotational component which is constant in magnitude and rotates, and a translational component which is fixed in direction and varies in magnitude with rotation of the crank shaft, and wherein
rotation of the balancer shaft generates an inertial force having a rotational component and a translational component which are substantially opposite to and of the same magnitude as those components of the primary, inertial force substantially at the location of the pivot axis.
A supported portion of the engine unit may provided on a crank case, which supports the crank shaft of the engine unit. Alternatively, other portions of the engine, such as the cylinder head or the like may define a supported portion of the engine unit.

A portion of the engine unit below a cylinder axis arranged in a forwardly inclined state is supported directly on the body frame.

A portion of the cooling duct which is disposed between a belt-chamber connected portion and a body fixed portion may be straight in shape as viewed in side view.

The cooling duct may extend to a rider's foot put portion (foot plate or rest) , which is positioned toward the front of a vehicle relative to the belt-chamber connected portion, from the connected portion.

The cooling duct is arranged so that a center line thereof as viewed in side view passes above the pivot axis.

The cooling duct may be substantially straight along a total length thereof. The cooling duct may extend substantially straight in a longitudinal direction of the motorcycle.

The motorcycle may further comprise left and right footboards, wherein the cooling duct extends below one of the left and right footboards in a longitudinal direction of the motorcycle.

A motorcycle may comprise an engine unit provided with a belt continuously variable transmission and a body frame, which supports the engine unit to make the same swingable vertically, a part of the engine unit being supported on the body frame to swing about an engine unit support portion of the body frame, the motorcycle further comprising a cooling duct for introduction of a cooling air into a belt chamber, in which the belt continuously variable transmission of the engine unit is accommodated, and wherein the cooling duct includes a flexible portion having flexibility and passes the vicinity of that portion, by which the engine unit is supported on the body frame, to connect to the belt chamber, and an opposite portion of the flexible portion to the belt chamber is fixed to the body frame.

Here, "a part of the engine unit is supported on the body frame to swing about an engine unit support portion of the body frame" as used herein means that a part of the engine unit is supported on the body frame without a linkage, which is usually used in a unit swing type engine suspension of a motorcycle, therebetween. Accordingly, the engine unit swings without having a center of swinging substantially shifting from the engine unit support portion of the body frame. In addition, "without --- substantially shifting" in this case means that like a case of being supported through an elastic bush or the like, a case of shifting corresponding to flexure of the elastic bush is included in "withoutsubstantially shifting".

Also, "a part --- is supported on the body frame" as used herein means that it includes the case where a cylinder block or a cylinder head or the like is supported, in addition to the case where a crank case is supported.

With the motorcycle described herein, since the engine unit is directly supported so as to swing about the engine unit support portion of the body frame, the engine unit simply swings only vertically and therefore, a construction will do, in which the flexible portion of the cooling duct absorbs only vertical fluctuation. Thereby, it is possible to form the flexible portion from one, which is high in strength to be able to correspond to external forces and a suction force in the belt chamber, and hence it is possible to ensure a sufficient quantity of an air as drawn, thus enabling heightening the belt chamber in coolability.

In the motorcycle described herein, since the engine unit is directly supported so as to swing about the engine unit support portion of the body frame, in other words, supported without a linkage therebetween, it is possible to heighten the responsibility to a throttle opening operation, thus enabling improving a feeling of directness at the start and at the time of acceleration. That is, in the case where such linkage is interposed between the engine unit and the body frame, when a throttle opening operation is performed in order to begin traveling from a state of stoppage, there is felt a delay in response such that engine torque is first once absorbed by the linkage in the course of transmission to the rear wheel and then transmitted to the rear wheel. Consequently, it is felt that a vehicle begins forward travel one tempo behind the throttle opening operation, and so there is not obtained an adequate feeling of directness especially at the start. In the motorcycle described herein, since any linkage is not interposed, it is possible to suppress the problem.

### BRIEF DESCRIPTION OF THE DRAWINGS

These and other aspects of the present invention will now be described below with reference to the accompanying drawings, in which:
Fig. 1 is a side view showing a motorcycle according to an embodiment of the invention;
Fig. 2 is a side view showing a body frame of the motorcycle;
Fig. 3 is a plan view showing the body frame;
Fig. 4 is a side view showing an engine unit supported on the body frame to be able to swing vertically;
Fig. 5 is a side view showing a balancer mechanism of the engine unit;
Fig. 6 is a cross sectional view showing the balancer mechanism;
Fig. 7 is a side view showing the engine unit;
Fig. 8 is a side view showing a cooling duct connected to the engine unit;
Fig. 9 is a side view showing a flexible duct of the cooling duct;
Fig. 10 is a cross sectional view (a cross sectional view taken along the line X-X in Fig. 8) showing the cooling duct;
Fig. 11 is a cross sectional view (a cross sectional view taken along the line XI-XI in Fig. 8) showing the cooling duct;
Fig. 12 is a plan view showing a cross section of an engine unit support portion of the engine according to the embodiment;
Fig. 13 is a schematic view illustrating the construction of the balancer mechanism of the engine according to the embodiment; and
Fig. 14 is a schematic view illustrating the function and effect obtained in a duct arrangement of the engine according to the embodiment.

### DETAILED DESCRIPTION OF THE DRAWINGS

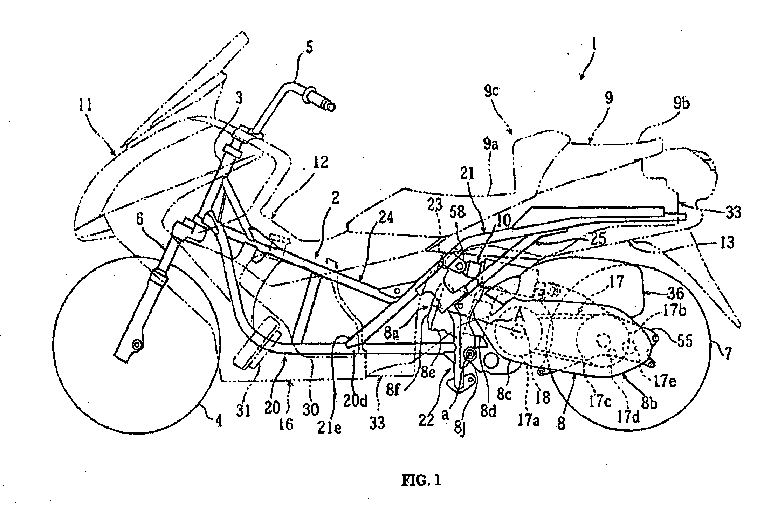

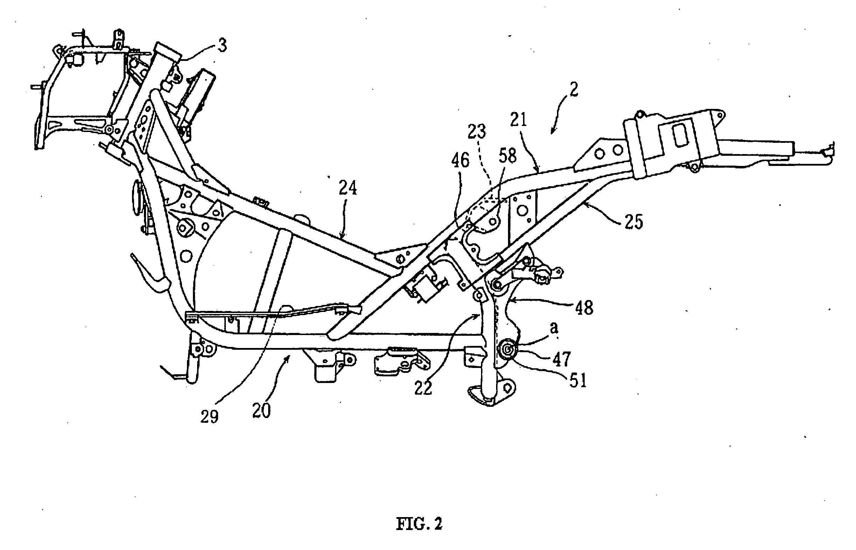

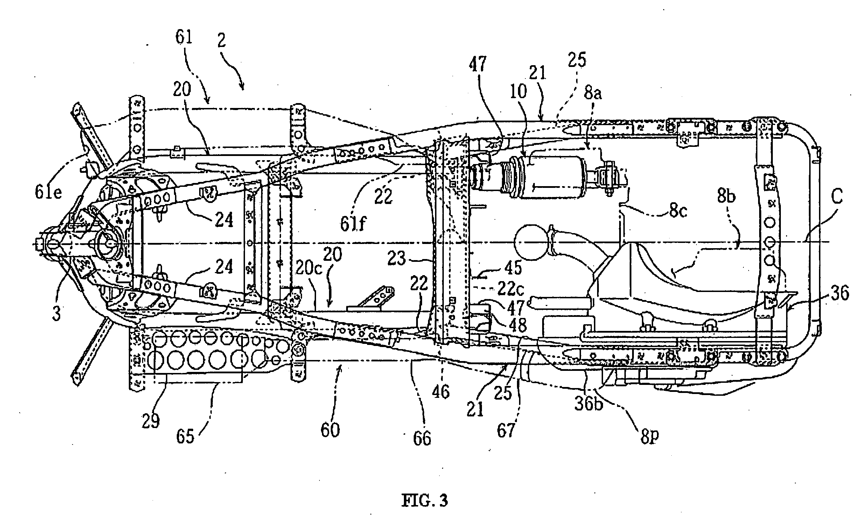

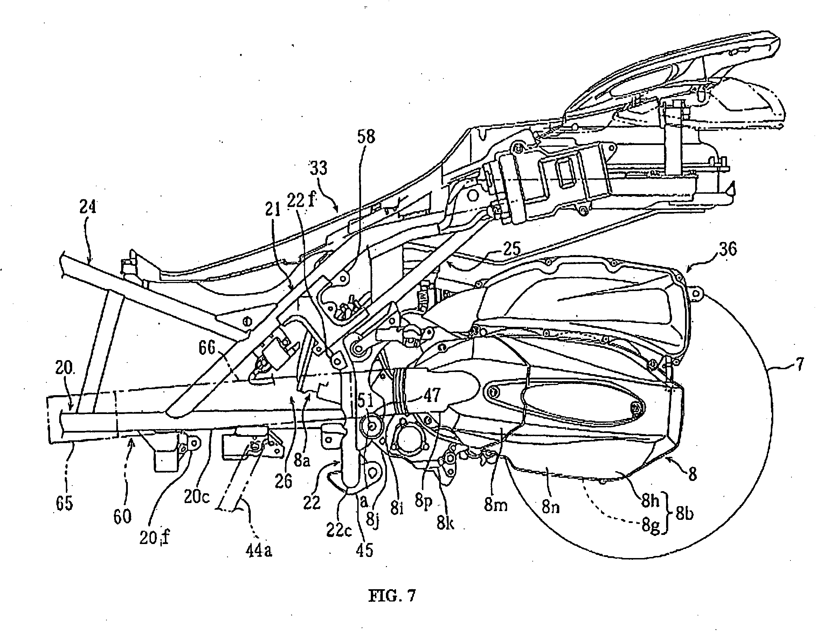

Figs. 1 to 14 are views illustrating a motorcycle according to an embodiment of the invention. In addition, front and rear, and left and right referred to in descriptions of the embodiment mean front and rear, and left and right as seen in a state of being seated on a seat of the motorcycle.

In the drawings, the reference numeral 1 denotes a scooter type motorcycle. The motorcycle 1 comprises a unit swing type engine unit 8 provided with a belt continuously variable transmission 17, an underbone type body frame 2, which supports the engine unit 8 to make the same swingable vertically, and a saddle-type seat 9 mounted on the body frame 2.

The motorcycle 1 comprises a front fork 6 supported by a head pipe 3 positioned at a front end of the body frame 2 to be steerable left and right, a steering handle 5 arranged at an upper end of the front fork 6, a front wheel 4 arranged at a lower end thereof, a rear wheel 7 arranged at a rear end of the engine unit 8, and a rear cushion or suspension unit 10 interposed between the engine unit 8 and the body frame 2.

Also, the motorcycle 1 comprises a front cover 11, which covers the front of the head pipe 3, a leg shield 12, which covers the rear of the head pipe 3 and the front of rider's legs, a side cover 13, which covers a lower periphery of the seat 9, foot boards 15 arranged at a lower edge of the leg shield 12, and undercovers 16, which cover lower portions of the foot boards 15 from laterally. The foot boards 15 are arranged on upper surfaces of foot brackets 29 fixed to the body frame 2.

The body frame 2 comprises left and right downtubes 20, 20 diverging outward from the head pipe 3 in a vehicle width direction, extending downward, and extending substantially horizontally and rearwardly from lower ends thereof, left and right seat rails 21, 21 extending rearwardly and obliquely upward from intermediate portions of the left and right downtubes 20, 20 and extending substantially horizontally and rearwardly from rear ends thereof, and left and right engine suspension frames 22, 22 extending vertically from rear ends of the left and right downtubes 20 and connected at upper ends thereof to the seat rails 21.

Also, the body frame 2 comprises left and right upper tubes 24, 24 extending substantially straight and rearwardly from the head pipe 3 and joined at rear ends thereof to the seat rails 21, left and right seat stays 25, 25 connecting between the left and right engine suspension frames 22 and the seat rails 21, and a cross member 23 connecting between portions near to connections of the left and right seat rails 21 to the engine suspension frames 22 in the vehicle width direction.

The engine unit 8, an engine body 8a and a transmission case 8b, in which the belt continuously variable transmission 17 is accommodated, are joined integrally. An air cleaner 36 is fixed to an upper wall surface of the transmission case 8b.

The engine body 8a is a water-cooled type four-stroke single cylinder engine mounted with a cylinder axis A directed substantially horizontally and constructed such that a cylinder block 8d, a cylinder head 8e, and a head cover 8f are successively joined to a front mating surface of a crank case 8c, in which a crank mechanism 18 including a crank shaft 18b arranged substantially horizontally in the vehicle width direction is accommodated.

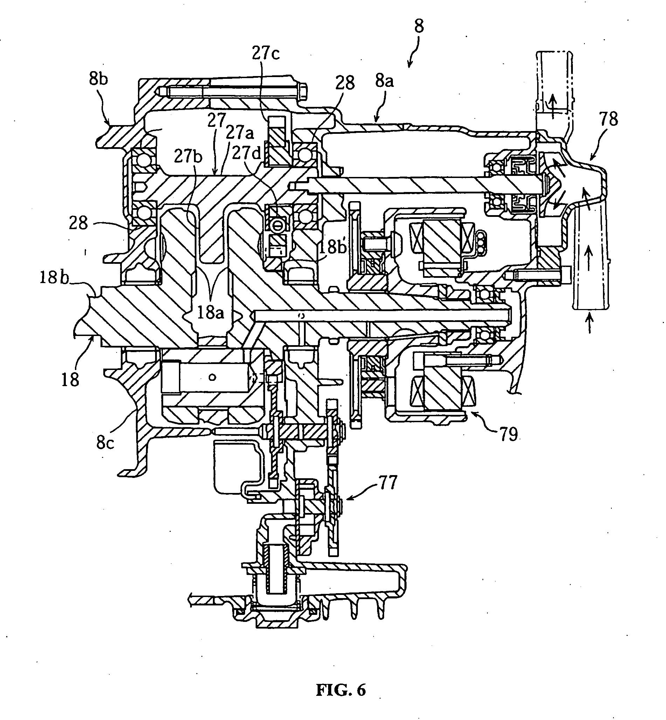

The V-belt continuously variable transmission 17 includes a drive pulley 17a arranged at a left end of the crank shaft 18b (see Fig. 6), which projects into the transmission case 8b, a driven pulley 17b arranged at a rear end of the transmission case 8b, and a V-belt 17c wound round the drive pulley 17a and the driven pulley 17b.

Also, a main shaft 17d, to which rotation of the driven pulley 17b is transmitted, and a drive shaft 17e are arranged in the transmission case 8b, and the rear wheel 7 is mounted to the drive shaft 17e.

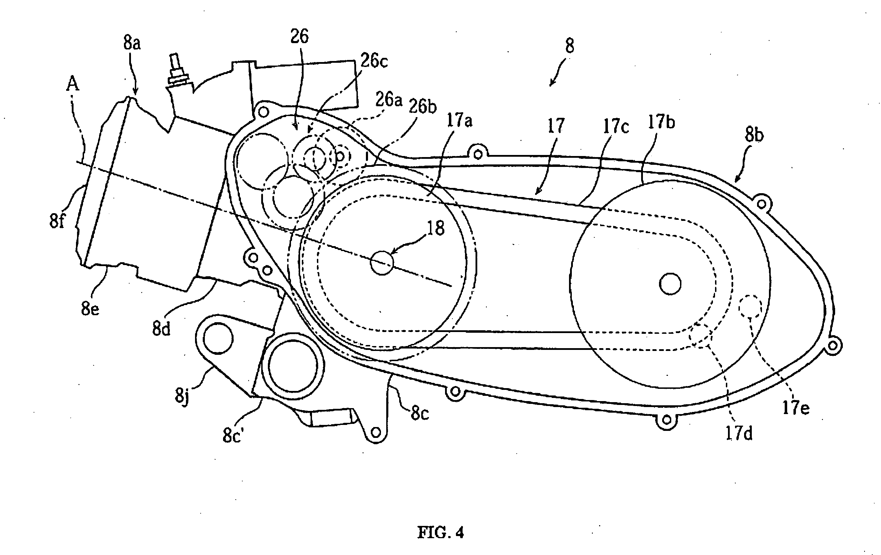

The V-belt continuously variable transmission 17 comprises a wound diameter varying mechanism 26 that uses a controller (not shown) to variably control a belt wound diameter of the drive pulley 17a between a low position and a top position on the basis of engine speed, vehicle speed, or the like with a rider's accelerator manipulated variable (see Fig. 4).

The wound diameter varying mechanism 26 includes a drive motor 26a, a reciprocating drive gear 26b, which axially moves a moving side sheave (not shown) of the drive pulley 17b to vary a wound diameter, and a reduction gear group 26c, which transmits rotation of the drive motor 26a to the reciprocating drive gear 26b.

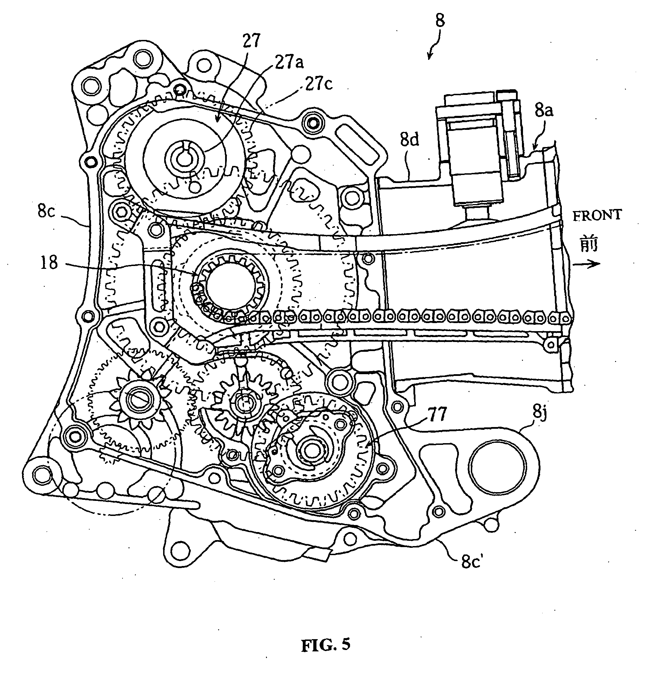

The engine unit 8 includes a balancer mechanism 27, which includes a balancer shaft 27a and suppresses engine vibrations due to a primary, inertial force, as shown in Figs. 5 and 6. The balancer mechanism 27 is constructed to rotate at the same rotating speed as that of the crank shaft 18b of the crank mechanism 18 and in a reverse direction thereto.

The balancer mechanism 27 includes a balancer shaft 27a arranged above the crank shaft 18b within the crank case 8c and arranged in parallel to the crank shaft 18b, and a balancer weight 27b formed integral with the balancer shaft 27a to extend perpendicularly to an axis thereof. The balancer weight 27b extends to be positioned between left and right counterweights 18a, 18a of the crank shaft 18b.

Left and right ends of the balancer shaft 27a are supported on the crank case 8c with bearings 28, 28 therebetween and a balancer gear 27c is joined to the balancer shaft 27a inwardly of the right bearing 28 with a damper member 27d therebetween. The balancer gear 27c meshes with a drive gear 18b' joined to the crank shaft 18b.

Here, a primary, inertial force generated by rotation of the crank shaft 18b of the crank mechanism 18 includes a rotational component, which is constant in magnitude and rotates, and a translational component, which is fixed in direction and varies in magnitude with rotation of the crank shaft 18b.

Also, the balancer mechanism 27 is constructed such that acceleration caused by a couple of forces, which a rotational component generated by a primary, inertial force of the crank shaft 18b balances an inertial force generated by rotation of the balancer shaft 27a to generate, and acceleration caused by a translational component of a primary, inertial force of the crank shaft 18b are substantially opposite to each other in direction and substantially equal in magnitude about a pivot shaft 51 being a portion, which supports the engine unit 8.

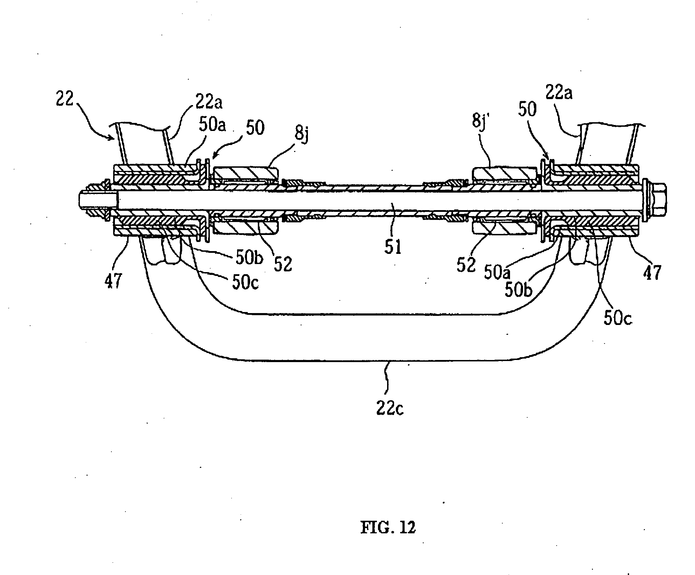

In order to make the both accelerations substantially opposite in direction and substantially the same in magnitude, it suffices to arrange an instantaneous center of rotation, at which vibrations caused by a primary, inertial force F1 of the crank mechanism 18 and a primary, inertial force F2 of the balancer mechanism 27 are not generated, on the pivot shaft 51 as shown in Fig. 12. An explanation will be given below to a way to arrange the instantaneous center of rotation on the pivot shaft 51.

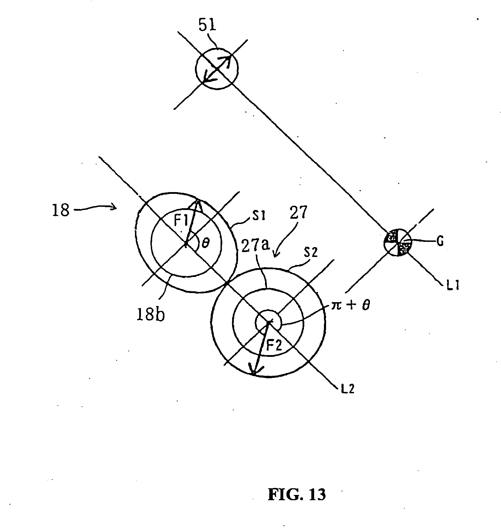

As shown in Fig. 13, a shape drawn by a locus of the primary, inertial force F1 of the crank mechanism 18 in vector representation over one cycle is a predetermined elliptical shape S1. On the other hand, the primary, inertial force F2 of the balancer mechanism 27 draws a vector locus having a shape S2 of a perfect circle. The balancer shaft 27a and the crank shaft 18b are arranged so that a crank-balancer straight line L2, which connects between the both shafts, is made substantially parallel to a center of gravity-target position straight line L1, which connects between a center G of gravity of the engine unit 8 and the pivot shaft 51.

Also, a major axis of an ellipse of the primary, inertial force of the crank mechanism 18 is arranged substantially in parallel to the crank-balancer straight line L2 and the primary, inertial force F2 of the balancer mechanism 27 is constituted so that a magnitude of a diameter of the shape S2 of a perfect circle is made substantially the same as that of the major axis of the ellipse of the primary, inertial force of the crank mechanism.

An instantaneous center of rotation can be arranged in the vicinity of the pivot shaft 51 by controlling an elliptical shape of the primary, inertial force of the crank mechanism so that acceleration caused by a translational force and acceleration caused by a couple of forces are made substantially opposite in direction and substantially the same in magnitude in the vicinity of the pivot shaft 51.

An explanation has been given taking, as an example, the case where the balancer shaft 27a and the crank shaft 18b are arranged so that the crank-balancer straight line L2, which connects between the both shafts, is made substantially in parallel to the center of gravity-target position straight line L1, which connects between the center G of gravity of the engine unit 8 and the pivot shaft 51. However, arrangement of the both shafts is not limited to this. This will be described below.

The elliptical shape of the primary, inertial force caused by the crank mechanism 18 is controlled by regulating at least the counterweights 18a of the crank mechanism 18. By regulating the counterweights 18a with respect to position and weight, it is possible to readily control the elliptical shape of the primary, inertial force caused by the crank mechanism 18 to the predetermined elliptical shape S1.

Also, by regulating the balancer weight 27b of the balancer mechanism 27 with respect to position and weight, it is possible to control the inertial force F2 of the balancer mechanism 27 so that a shape drawn by a locus in vector representation over one cycle becomes the shape S2 of a perfect circle having a predetermined magnitude.

In the manner described above, it is possible to arrange an instantaneous center of rotation in a target position, that is, in the vicinity of the pivot shaft 51 even in the case where the crank-balancer straight line L2 is not in parallel to the center of gravity-target position straight line L1.

In this manner, since it is possible to suppress vibrations in the vicinity of the pivot shaft 51, there is no need of providing a linkage that inhibits engine vibrations from being transmitted to the body frame, etc. Thereby, it is possible to reduce the number of parts and to minimise weight.

In addition, the reference numeral 77 denotes an oil pump (see Figs. 5 and 6) , which pressure feeds a lubricating oil at the bottom of the crank case 8c to respective lubricated parts of the engine body 8a, and the reference numeral 78 denotes a cooling water pump, which pressure feeds a cooling water to respective cooling water jackets of the engine body 8a. Also, the reference numeral 79 denotes an alternator.

A part of the engine unit 8 is supported so as to swing about the pivot members (engine unit support portion) 47 formed on the left and right engine suspension frames 22, 22 of the body frame 2. More specifically, the engine unit 8 swings vertically about an axis a of the pivot shaft 51 inserted into the pivot members 47 and a portion thereof below the cylinder axis A is supported directly, that is, without a linkage therebetween. More specifically, the following construction is provided.

Lower ends of the left and right engine suspension frames 22 are connected integrally by a lower side portion 22c. The left and right cylindrical-shaped pivot members 47, 47 arranged with axes thereof directed in the vehicle width direction are fixed in the vicinity of the connections of the left and right engine suspension frames 22 to the downtubes 20. Elastic bushes 50, 50 are fixedly inserted into the left and right pivot members 47, 47. The respective elastic bushes 50 are structured such that a rubber member 50c is interposed between an outer cylinder 50a and an inner cylinder 50b. Pivot shaft 51 is fixedly inserted into the left and right inner cylinders 50b.

A pair of left and right suspensions (supported portions) 8j, 8j are forwardly protrusively formed on a bottom wall front 8c' of the crank case 8c to be positioned below the cylinder axis A of the cylinder block 8d. The left and right suspensions 8j are arranged inside the left and right pivot members 47 and supported through bearings 52, 52 by the pivot shafts 51 to be able to turn. Thereby, the engine unit 8 is supported and suspended through the pivot shafts 51 and the elastic bushes 50 by the left and right pivot members 47 to be able to swing vertically.

In this manner, in the case where the engine unit 8 is supported directly on the body frame 2, the engine unit 8 is supported through the elastic bushes 50, so that engine vibrations and vibrations from a road surface can be inhibited from being transmitted to a rider through the body frame 2.

A fuel tank 30 is arranged at a front end in the body frame 2 and a radiator 31 is arranged below the fuel tank 30. Also, an upwardly opened storage box 33 made of a resin is arranged rearwardly of the fuel tank 30.

The seat 9 includes a main seat 9a, on which a rider is seated, and a tandem seat 9b, which is formed separately from the main seat 9a and on which a rear crew is seated. A back rest 9c is arranged at a rear end of the main seat 9a to support a rider's waist.

The main seat 9a is supported at a front end of the storage box 33 to be able to turn forward and the tandem seat 9b is arranged at a rear end of the storage box 33 to be able to turn rearward.

The engine unit 8 is coupled to a cooling duct 60 for introduction of a cooling air into the transmission case 8b, in which the belt continuously variable transmission 17 is accommodated. The cooling duct 60 includes a flexible portion having flexibility and passes the vicinity of a portion of the engine unit supported on the body frame to connect to the belt chamber, and a portion of the flexible portion opposite to the belt chamber is fixed to the body frame.

Specifically, the cooling duct 60 is formed to extend substantially straight along a substantially straight, horizontal portions 20c of the left downtube 20 in a longitudinal direction and arranged to pass below the foot boards (foot put portions) 15 and inwardly of the undercovers 16. Maintenance openings 16a are formed on those portions of the undercovers 16, which face the first air duct 60, the maintenance openings 16a being covered by lid members 76 to be able to open and close.

The cooling duct 60 includes an element 65 arranged below the foot boards 15, an intermediate duct 66 extending rearward from the element 65, and a flexible duct (flexible portion) 67 having flexibility and extending rearward from the intermediate duct 66 to provide connection and communication between the intermediate duct 66 and an interior of the transmission case 8b, and the flexible duct 67 is positioned just near to or adjacent a portion of the engine unit supported on the body frame.

Also, the element 65, the intermediate duct 66, and the flexible duct 67, respectively, are clamped detachably by means of band members 68, 68, 68.

The transmission case 8b includes a case body 8g contiguous to a left end of the crank case 8c to extend rearward, and a case cover 8h mounted detachably to a left mating surface of the case body 8g, and a space defined by the case cover 8h and the case body 8g provides a belt chamber. Here, the drive pulley 17a is formed with a multiplicity of vanes (not shown), which are caused by torque of the drive pulley 17a to drawn cooling air into the belt chamber.

The case cover 8h is divided into a front case 8m, which is fixed to the case body 8g by means of a plurality of bolts 73, and a rear case 8n fixedly bolted to the case body 8g likewise.

The front case 8m is formed integrally with an air inlet 8p, which extends forward in a cylindrical manner, and the flexible duct 67 is clamped detachably to the air inlet 8p by the band members 68. Accordingly, the air inlet 8p defines a belt chamber connected portion of the cooling duct 60. Also, an air discharge port (not shown) is formed at a rear end of the transmission case 8b.

Travel wind having flowed into the left and right undercovers 16 is filtered by the element 65 to pass through the intermediate duct 66 and the flexible duct 67 to be drawn into the transmission case 8b via the air inlet 8p by the drive pulley 17a to cool the V-belt 17c, etc. The air is then discharged outside from the rear end of the transmission case 8b.

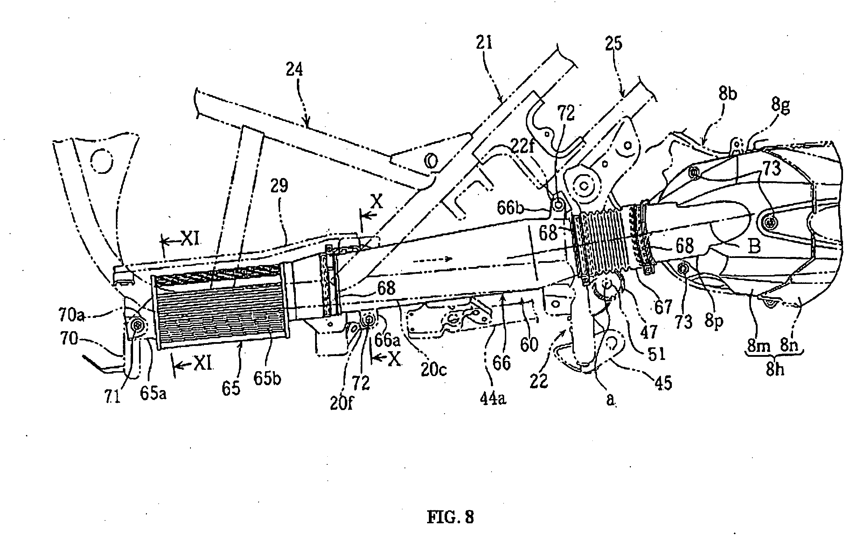

A mount 65a (see Fig. 8) is formed on a front wall of the element 65 to project forward, the mount 65a being fixed to a bracket 70a of a radiator support member 70, which is connected to bridge the left and right downtubes 20, 20, by means of a bolt 71.

Front and rear mounts (body side fixed portions) 66a, 66b, respectively, are formed on a front, lower edge and a rear, upper edge of the intermediate duct 66 to project downward and upward (see Fig. 8). The front mount 66a is fixed to a bracket 20f, which is connected to the downtube 20, by means of a bolt 72 and the rear mount 66b is fixed to a bracket 22f, which is fixed to the engine suspension frame 22, by means of a bolt 72.

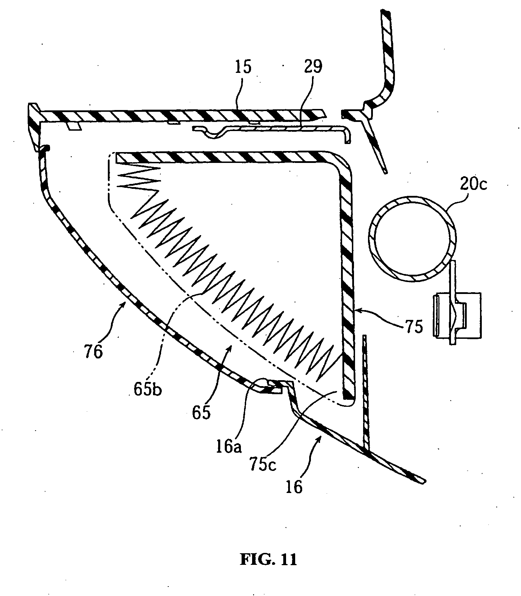

The element 65 is a cylinder having a triangular-shaped cross section (see Fig. 11) and structured such that an element body 65b is arranged in an element case 75 to filter an air. An air inlet port 75c of the element case 75, and hence the element body 65b, is arranged to be opposed to an inner side of the undercover 16 with a predetermined clearance therebetween.

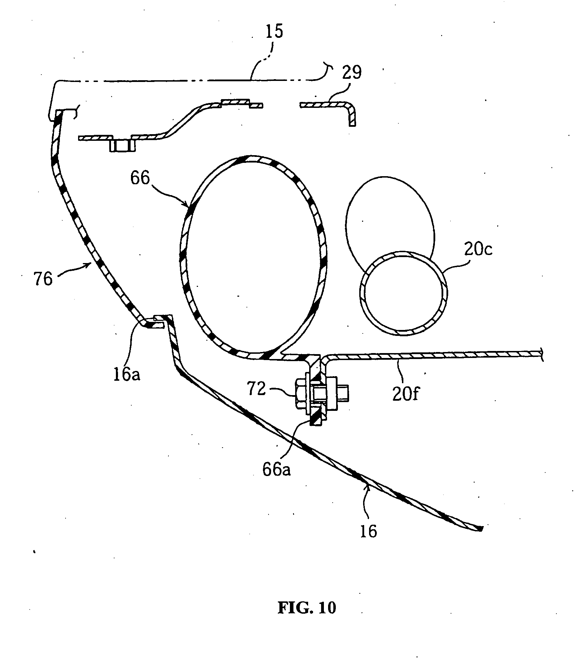

The intermediate duct 66 is longitudinally elliptical-shaped (see Fig. 10) and arranged to pass between the lower horizontal portion 20c of the downtube 20 and a side stand 44a present in a storage position.

The cooling duct 60 is substantially straight over a total length thereof to extend from the air inlet 8p, which defines a connection to the belt chamber, to a front end of the foot board 15 positioned in the front of a vehicle.

As shown in Fig. 8, the flexible duct 67 is arranged so that its center line B thereof as viewed in side view passes above and near to the axis a of the pivot member 47 and the rear mount 66b of the intermediate duct 66 on an opposite side of the flexible duct 67 to the transmission case 8b is fixed to the engine suspension frame 22.

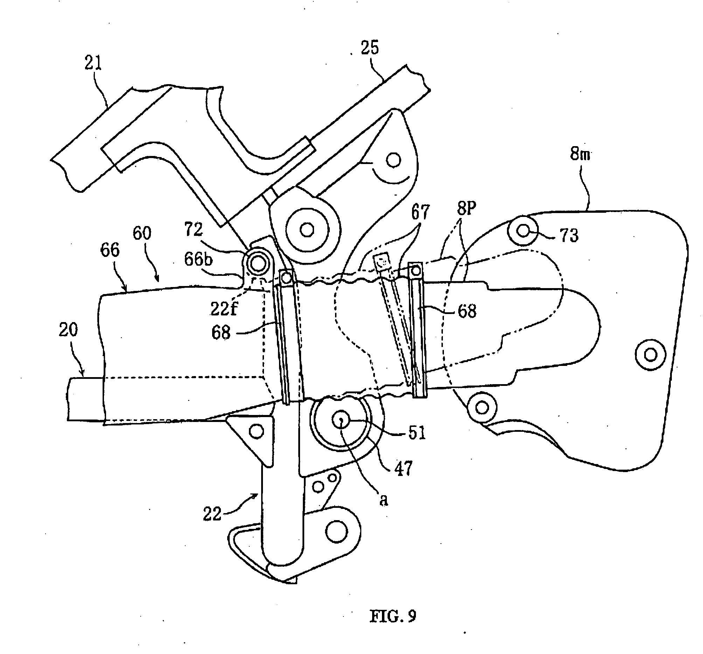

In this manner, the flexible duct 67 becomes free to bend between a state at the time of minimum stroke (indicated by solid lines in Fig. 9), and a state at the time of maximum stroke (indicated by two-dot chain lines), according to a vertically swinging stroke of the engine unit 8 about the pivot shafts 51. In this case, since the flexible duct 67 is arranged in the vicinity of the pivot shaft 51, an amount of bending, which accompanies a change in stroke, is smaller than that in the case where the flexible duct 67 is arranged in a position distant from the pivot shaft of the engine unit.

According to the embodiment, since the engine unit 8 is supported to swing about the axis a of the pivot member 47, which constitutes an engine unit support portion of the body frame, the engine unit 8 simply swings only vertically and therefore, a construction will do, in which the flexible duct 67 of the cooling duct 60 absorbs vertical fluctuation. Thereby, it is possible to form the flexible duct 67 from one piece, which is high in strength to be able to accommodate external forces and a suction force in the belt chamber, and hence it is possible to ensure a sufficient quantity of an air as drawn, thus permitting an increase in the cooling efficiency of the V-belt 17c.

According to the embodiment described, since a part of the engine unit 8 is supported on the body frame to swing about the axis a of the pivot shaft 51 of the pivot member 47, which constitutes an engine unit support portion, in other words, supported without a linkage, which is usually used in a unit swing type engine suspension, therebetween, the engine unit 8 can be swung without having a center of swinging thereof substantially shifting from the axis a. Therefore, it is possible to increase the responsibility to a throttle opening manipulation as compared with the case where a link mechanism interposes, thus enabling a feeling of directness at the time of starting and acceleration. That is, in the case where a link mechanism interposes between an engine unit and a body frame, there is felt a response lag that when a throttle opening manipulation is performed in order to begin travel from a stopped state, engine torque is initially absorbed by the link mechanism in the course of transmission to a rear wheel and thereafter transmitted to the rear wheel. Consequently, there occurs a feeling that a vehicle begins advancing one tempo behind the throttle opening manipulation, and a sufficient feeling of directness is not obtained especially at the time of starting. According to the embodiment, since the engine unit 8 is supported directly on the body frame 2 without interposing any link mechanism therebetween, it is possible to suppress the problem described above.

Also, since the engine unit 8 is supported by the pivot members 47 with the elastic bushes 50 therebetween, it is possible to suppress transmission of engine vibrations to a side of a vehicle body. In addition, even in the case where the elastic bushes 50 are interposed, a center of swinging of the engine unit 8 is not substantially shifted. That is, the center of swinging microscopically shifts corresponding to flexure of the elastic bushes 50 but such movement in this order has little influence on that delay in response, which is problematically discussed in the invention.

Furthermore, according to the embodiment, since the balancer mechanism 27 is provided on the engine unit 8, it is possible to suppress vibrations themselves caused by the engine unit 8, thus enabling suppressing transmission of engine vibrations to a rider through the body frame 2 while the engine unit 8 is supported directly by the body frame 2.

More specifically, since the balancer mechanism 27 is constructed such that acceleration caused by a couple of forces, which a rotational component generated by a primary, inertial force of the crank shaft 18b balances an inertial force generated by rotation of the balancer shaft 27a to generate, and acceleration caused by a translational component of a primary, inertial force of the crank shaft 18b are substantially opposite to each other in direction and substantially the same in magnitude in the vicinity of the axis a of the pivot shaft 51 being that portion of the engine unit 8, which is supported on the body frame, it is possible to suppress transmission of engine vibrations to a rider.

According to the embodiment described, since that portion of the engine unit 8 which is disposed below the cylinder axis A is suspended from and supported on the body frame 2, an amount by which, in particular, a connection of the engine unit 8 to the cooling duct fluctuates vertically, can be decreased as compared with the case where that portion of the engine unit, which is disposed above the cylinder axis A, is supported. Thereby, the flexible duct 67 is decreased in amount of vertical fluctuation, so that it is possible to simplify the flexible duct 67 in structure while maintaining or achieving a correspondingly high strength.

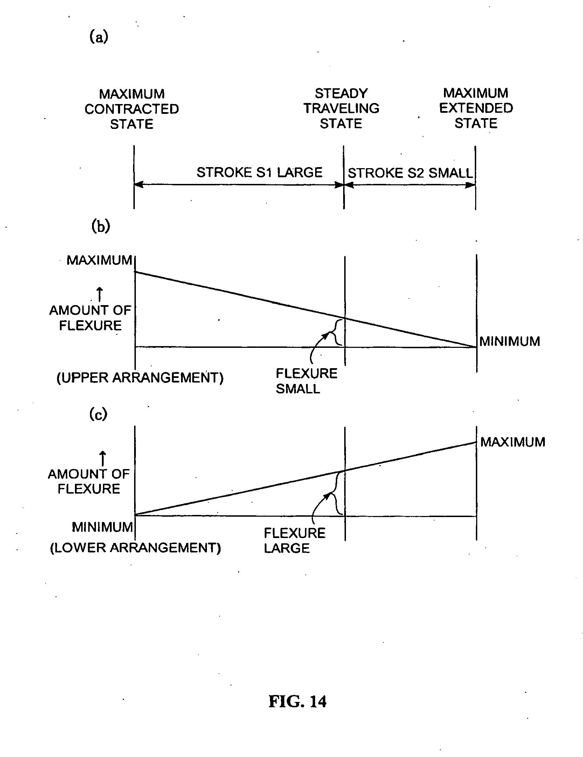

Furthermore, since the flexible duct 67 is arranged so as to be positioned in the vicinity of the pivot member 47 of the body frame 2, it is possible in terms of this to decrease the flexible duct 67 in amount of vertical fluctuation, thus enabling making the flexible duct 67 further simple in structure and making it easy to ensure a high strength. According to the disclosed embodiment, since the cooling duct 60 is formed so that the entire duct 60, including the flexible duct 67, is made substantially straight in a longitudinal direction of a vehicle, it is possible to reduce air resistance to a cooling air flowing in the cooling duct 60. Consequently, it is possible to ensure a sufficient volume of air is drawn into the belt chamber and hence to achieve an improvement in engine responsibility. According to the embodiment described herein, since the cooling duct 60 is formed to extend from the connection of the engine unit 8 to the belt chamber, to the front ends of the foot boards 15 for a rider positioned in the front of a vehicle, it is possible to make the cooling duct 60 large in volume. Thereby, it is possible to ensure a volume of air is drawn at the time of starting and acceleration, thus enabling heightening the V-belt 17c coolability. Also, since the flexible duct 67 is arranged so that its center line B as viewed in side view passes above the axis a of the pivot member 47, being that portion of the engine unit 8 which is supported on the body frame, it is possible to decrease flexure of the bellows-shaped flexible duct 67 for the following reason, thus enabling correspondingly decreasing the flow resistance in the duct. That is, with respect to stroke in the suspension device for the engine unit 8, a stroke S1 from a steady traveling state to a maximum contracted state (high load input state) is usually set to be larger than a stroke S2 from a steady traveling state to a maximum extended state as shown in Fig. 14(a).

In the case where the flexible duct 67 is arranged above the axis a of the engine unit support portion, the flexible duct 67 is contracted as the engine unit 8 makes a stroke to the maximum contracted state and extended as the engine unit makes a stroke to the maximum extended state. Accordingly, an amount of flexure of the bellows of the flexible duct 67 becomes maximum in the maximum contracted state and minimum in the maximum extended state as shown in Fig. 14(b). Since an amount of flexure in the steady traveling state is close to the minimum amount of flexure and so small, flow resistance in the duct decreases.

On the other hand, in the case where the flexible duct 67 is arranged below the axis a of the engine unit support portion, the flexible duct 67 is extended upon a stroke to the maximum contracted state and contracted upon a stroke to the maximum extended state. Accordingly, an amount of flexure of the bellows of the flexible duct 67 becomes minimum in the maximum contracted state and maximum in the maximum extended state as shown in Fig. 14(c). Since an amount of flexure in the steady traveling state is close to the maximum amount of flexure and so large, flow resistance in the duct increases.

### Description of Reference Numerals and Signs

1: motorcycle
2: body frame
8: engine unit
8b: transmission case (belt chamber)
8c: crank case
8j: suspension portion (a part of engine unit)
8p: belt chamber connected portion
15: foot board (foot put portion)
17: belt continuously variable transmission
18: crank mechanism
18b: crank shaft
27: balancer mechanism
27a: balancer shaft
47: pivot member (engine unit support portion)
50: elastic bush (elastic member)
51: pivot shaft (portion supported on body frame)
60: cooling duct
66b: mount (body fixed portion)
67: flexible duct (flexible portion)
A: cylinder axis
B: center line of cooling duct

## Claims

1. A motorcycle (1) comprising:
a body frame (2);
an engine unit (8) mounted on the body frame (2), wherein said engine unit (8) comprises a belt continuously variable transmission (17) accommodated within a belt chamber (8b) and a cylinder axis (A) of the engine unit (8) is arranged in a forwardly inclined state; and
a cooling duct (60) adapted to communicate cooling air into the belt chamber (8b), wherein said cooling duct (60) comprises a flexible portion (67),
**characterized in that** the engine unit (8) is directly pivotally mounted on the body frame (2) about a pivot axis, and a portion of the engine unit (8) below the cylinder axis (A) is supported directly on the body frame (2),
and **in that** the flexible portion (67) of the cooling duct (60) extends adjacent the engine pivot axis,
and **in that** the cooling duct (60) is arranged so that a center line (B) thereof as viewed in side view passes above the engine pivot axis.

2. The motorcycle (1) according to claim 1, wherein the engine unit (8) is directly pivotally mounted through an elastic member (50) on the body frame (2).

3. The motorcycle (1) according to claim 1 or 2, wherein the engine unit (8) is directly pivotally mounted on the body frame (2) via a pivot shaft (51).

4. The motorcycle (1) of claim 1, 2 or 3, wherein a portion (66) of the cooling duct (60) located upstream of the flexible portion (67) is fixed to the body frame (2).

5. The motorcycle (1) according to any preceding claim, wherein the engine unit (8) comprises a balancer mechanism (27) which includes a balancer shaft (27a) and is adapted to suppress engine vibrations due to a primary, inertial force.

6. The motorcycle (1) according to claim 5, wherein the engine unit (8) further comprises a crank mechanism (18) including a crank shaft (18b), wherein
the crank shaft (18b) is adapted such that rotation of the crank shaft (18b) generates the primary, inertial force including a rotational component which is constant in magnitude and rotates, and a translational component which is fixed in direction and varies in magnitude with rotation of the crank shaft (18b), and wherein
the balancer shaft (27a) is adapted such that rotation of the balancer shaft (27a) generates an inertial force having a rotational component which balances that of the primary, inertial force, and a translational component which is substantially opposite to and is of the same magnitude than that of the primary, inertial force substantially at the location of the engine pivot axis.

7. The motorcycle (1) according to any preceding claim, wherein a supported portion of the engine unit (8) is provided on a crank case (8c), which supports the crank shaft (18b) of the engine unit (8).

8. The motorcycle (1) according to any one of claims 4 to 7, wherein at least a portion of the cooling duct (60) which is disposed between a belt-chamber connected portion and a body fixed portion is straight in shape as viewed in side view.

9. The motorcycle (1) according to any preceding claim, wherein the cooling duct (60) extends to a rider's foot put portion (15), which is positioned toward the front of the motorcycle (1) relative to a belt-chamber connected portion, from the connected portion.

10. The motorcycle (1) according to any preceding claim, wherein the cooling duct (60) is substantially straight along a total length thereof.

11. The motorcycle (1) according to claim 10, wherein the cooling duct (60) extends substantially straight in a longitudinal direction of the motorcycle (1).

12. The motorcycle (1) according to any preceding claim, further comprising left and right footboards (15), wherein the cooling duct (60) extends below one of the left and right footboards (15) in a longitudinal direction of the motorcycle (1).

13. The motorcycle (1) according to any preceding claim, wherein the cooling duct (60) is substantially straight over a total length thereof to extend from an air inlet (8p) , which defines a connection to the belt chamber (8b), to a front end of a foot board (15) positioned in the front of the motorcycle (1).

## Patentansprüche

1. Motorrad (1), das aufweist:
ein Karosseriegerippe (2);
eine Motorbaugruppe (8), die am Karosseriegerippe (2) montiert ist, wobei die Motorbaugruppe (8) ein stufenlos verstellbares Riemengetriebe (17) aufweist, das innerhalb einer Riemenkammer (8b) aufgenommen wird, und wobei eine Zylinderachse (A) der Motorbaugruppe (8) in einem nach vom geneigten Zustand angeordnet ist; und
einen Kühlschlitz (60), der ausgebildet ist, um Kühlluft in die Riemenkammer (8b) zu übertragen, wobei der Kühlschlitz (60) einen flexiblen Abschnitt (67) aufweist,
**dadurch gekennzeichnet, dass** die Motorbaugruppe (8) direkt schwenkbar am Karosseriegerippe (2) um eine Schwenkachse montiert ist und ein Abschnitt der Motorbaugruppe (8) unterhalb der Zylinderachse (A) direkt am Karosseriegerippe (2) getragen wird,
und **dadurch**, dass sich der flexible Abschnitt (67) des Kühlschlitzes (60) benachbart der Motorschwenkachse erstreckt,
und **dadurch**, dass der Kühlschlitz (60) so angeordnet ist, dass eine Mittellinie (B) davon, wenn in Seitenansicht betrachtet wird, oberhalb der Motorschwenkachse verläuft.

2. Motorrad (1) nach Anspruch 1, bei dem die Motorbaugruppe (8) direkt schwenkbar mittels eines elastischen Elementes (50) am Karosseriegerippe (2) montiert ist.

3. Motorrad (1) nach Anspruch 1 oder 2, bei dem die Motorbaugruppe (8) direkt schwenkbar am Karosseriegerippe (2) mittels einer Schwenkwelle (51) montiert ist.

4. Motorrad (1) nach Anspruch 1, 2 oder 3, bei dem ein Abschnitt (66) des Kühlschlitzes (60), der stromaufwärts vom flexiblen Abschnitt (67) angeordnet ist, am Karosseriegerippe (2) befestigt ist.

5. Motorrad (1) nach einem der vorhergehenden Ansprüche, bei dem die Motorbaugruppe (8) einen Ausgleichswellenmechanismus (27) aufweist, der eine Ausgleichswelle (27a) umfasst und ausgebildet ist, um Motorschwingungen zu unterdrücken, die auf eine primäre Trägheitskraft zurückzuführen sind.

6. Motorrad (1) nach Anspruch 5, bei dem die Motorbaugruppe (8) außerdem ein Kurbelgetriebe (18) aufweist, das eine Kurbelwelle (18b) umfasst, wobei
die Kurbelwelle (18b) so ausgebildet ist, dass die Drehung der Kurbelwelle (18b) die primäre Trägheitskraft erzeugt, die eine Rotationskomponente, die in der Größe konstant ist und sich dreht, und eine Translationskomponente umfasst, die in der Richtung unveränderlich ist und in der Größe mit der Drehung der Kurbelwelle (18b) variiert, und wobei
die Ausgleichswelle (27a) so ausgebildet ist, dass die Drehung der Ausgleichswelle (27a) eine Trägheitskraft mit einer Rotationskomponente, die die der primären Trägheitskraft ausgleicht, und einer Translationskomponente erzeugt, die im Wesentlichen entgegengesetzt dazu und von der gleichen Größe ist wie die der primären Trägheitskraft, im Wesentlichen an der Stelle der Motorschwenkachse.

7. Motorrad (1) nach einem der vorhergehenden Ansprüche, bei dem ein gestützter Abschnitt der Motorbaugruppe (8) an einem Kurbelgehäuse (8c) vorhanden ist, der die Kurbelwelle (18b) der Motorbaugruppe (8) trägt.

8. Motorrad (1) nach einem der Ansprüche 4 bis 7, bei dem mindestens ein Abschnitt des Kühlschlitzes (60), der zwischen einem mit der Riemenkammer verbundenen Abschnitt und einem an der Karosserie befestigten Abschnitt angeordnet ist, in der Form geradlinig ist, wenn man in der Seitenansicht betrachtet.

9. Motorrad (1) nach einem der vorhergehenden Ansprüche, bei dem sich der Kühlschlitz (60) zu einem Fußauflageabschnitt (15) des Fahrers erstreckt, der in Richtung der Vorderseite des Motorrades (1) relativ zu einem mit der Riemenkammer verbundenen Abschnitt vom verbundenen Abschnitt aus positioniert ist.

10. Motorrad (1) nach einem der vorhergehenden Ansprüche, bei dem der Kühlschlitz (60) entlang seiner Gesamtlänge im Wesentlichen geradlinig ist.

11. Motorrad (1) nach Anspruch 10, bei dem sich der Kühlschlitz (60) im Wesentlichen geradlinig in einer Längsrichtung des Motorrades (1) erstreckt.

12. Motorrad (1) nach einem der vorhergehenden Ansprüche, das außerdem ein linkes und rechtes Trittbrett (15) aufweist, wobei sich der Kühlschlitz (60) unterhalb eines von linkem und rechtem Trittbrett (15) in einer Längsrichtung des Motorrades (1) erstreckt.

13. Motorrad (1) nach einem der vorhergehenden Ansprüche, bei dem der Kühlschlitz (60) im Wesentlichen geradlinig über eine gesamte Länge davon ist, um sich von einem Lufteintritt (8p), der eine Verbindung zur Riemenkammer (8b) definiert, zu einem vorderen Ende eines Trittbrettes (15) zu erstrecken, das im Vorderteil des Motorrades (1) positioniert ist.

## Revendications

1. Motocyclette (1) comprenant:
un cadre (2);
une unité de moteur (8) montée sur le cadre (2), dans laquelle ladite unité de moteur (8) comprend une transmission à variation continue de type à courroie (17) logée dans une chambre de courroie (8b) et un axe de cylindre (A) de l'unité de moteur (8) est disposé dans un état incliné vers l'avant ; et
une conduite de refroidissement (60) adaptée pour envoyer de l'air de refroidissement dans la chambre de courroie (8b), dans laquelle ladite conduite de refroidissement (60) comprend une partie flexible (67),
**caractérisée par le fait que** l'unité de moteur (8) est montée directement sur le cadre (2) de manière pivotant autour d'un axe de pivotement et une partie de l'unité de moteur (8) sous l'axe de cylindre (A) est supportée directement sur le cadre (2),
et **par le fait que** la partie flexible (67) de la conduite de refroidissement (60) s'étend de manière adjacente à l'axe de pivotement du moteur,
et **par le fait que** la conduite de refroidissement (60) est disposée de manière à ce qu'une ligne médiane (B) de la conduite, vue de côté, passe au-dessus de l'axe de pivotement du moteur.

2. Motocyclette (1) selon la revendication 1, dans laquelle l'unité de moteur (8) est montée directement sur le cadre (2), de manière pivotante, par le biais d'un élément élastique (50).

3. Motocyclette (1) selon la revendication 1 ou 2, dans laquelle l'unité de moteur (8) est montée directement sur le cadre (2), de manière pivotante, par le biais d'un arbre pivot (51).

4. Motocyclette (1) selon la revendication 1, 2 ou 3, dans laquelle une partie (66) de la conduite de refroidissement (60) située en amont de la partie flexible (67) est fixée sur le cadre (2).

5. Motocyclette (1) selon l'une quelconque des revendications précédentes, dans laquelle l'unité de moteur (8) comprend un mécanisme d'équilibrage (27) qui comprend un arbre d'équilibrage (27a) et est adapté pour supprimer les vibrations du moteur dues à une force d'inertie primaire.

6. Motocyclette (1) selon la revendication 5, dans laquelle l'unité de moteur (8) comprend, en outre, un mécanisme à manivelle (18) incluant un vilebrequin (18b), dans laquelle
le vilebrequin (18b) est adapté pour que la rotation du vilebrequin (18b) génère la force d'inertie primaire qui comprend une composante rotationnelle dont la grandeur est constante et qui tourne et une composante translationnelle dont la direction est fixe et dont la grandeur varie avec la rotation du vilebrequin (18b), et dans laquelle
l'arbre d'équilibrage (27a) est adapté pour que la rotation de l'arbre d'équilibrage (27a) génère une force d'inertie comprenant une composante rotationnelle qui équilibre celle de la force d'inertie primaire et une composante translationnelle essentiellement opposée à et de même grandeur que celle de la force d'inertie primaire sensiblement à l'endroit où est situé l'axe de pivotement du moteur.

7. Motocyclette (1) selon l'une quelconque des revendications précédentes, dans laquelle une partie supportée de l'unité de moteur (8) est prévue sur un carter (8c), laquelle partie supporte le vilebrequin (18b) de l'unité de moteur (8).

8. Motocyclette (1) selon l'une quelconque des revendications 4 à 7, dans laquelle au moins une partie de la conduite de refroidissement (60) qui est située entre une partie reliée à la chambre de courroie et une partie fixe du cadre a une forme droite, vue de côté.

9. Motocyclette (1) selon l'une quelconque des revendications précédentes, dans laquelle la conduite de refroidissement (60) s'étend jusqu'à une partie de repose-pied (15) pour un passager, qui est positionnée vers l'avant de la motocyclette (1) par rapport à une partie reliée à la chambre de courroie, à partir de la partie reliée.

10. Motocyclette (1) selon l'une quelconque des revendications précédentes, dans laquelle la conduite de refroidissement (60) est essentiellement droite sur la totalité de sa longueur.

11. Motocyclette (1) selon la revendication 10, dans laquelle la conduite de refroidissement (60) s'étend de manière essentiellement droite dans une direction longitudinale de la motocyclette (1).

12. Motocyclette (1) selon l'une quelconque des revendications précédentes, comprenant, en outre, des repose-pieds gauche et droit (15), dans laquelle la conduite de refroidissement (60) s'étend en-dessous de l'un des repose-pieds gauche et droit (15) dans une direction longitudinale de la motocyclette (1).

13. Motocyclette (1) selon l'une quelconque des revendications précédentes, dans laquelle la conduite de refroidissement (60) est essentiellement droite sur la totalité de sa longueur pour s'étendre depuis une entrée d'air (8p), qui définit une connexion à la chambre de courroie (8b), jusqu'à une extrémité antérieure d'un repose-pieds (15) positionné à l'avant de la motocyclette (1).
